## Europäisches Patentamt
## European Patent Office
## Office européen des brevets

(19)

(11) Publication number: **0 145 675**
A2

# EUROPEAN PATENT APPLICATION

(12)

(21) Application number: **84830294.9**

(22) Date of filing: **31.10.84**

(51) Int. Cl.⁴: **B 32 B 3/14,** B 32 B 5/20, B 29 C 33/18, E 04 C 2/26, E 04 F 13/08

(30) Priority: **10.11.83 IT 4931783**

(43) Date of publication of application: **19.06.85** **Bulletin 85/25**

(84) Designated Contracting States: **AT BE CH DE FR GB LI LU NL SE**

(71) Applicant: **1T - ONE TILE S.p.A., Contrada Selciatella, I-03012 Anagni (Frosinone) (IT)**

(72) Inventor: **Vestrella, Paolo, Piazza Dante 3, I-03012 Anagni (Frosinone) (IT)**
Inventor: **Liverotti, Claudio, Vicolo Luciano Manara, I-00040 Frascati Roma (IT)**

(74) Representative: **Massari, Marcello, Studio M. Massari S.r.l. 23, Via Fontanella Borghese, I-00186 Roma (IT)**

(54) **A panel-shaped composite material for covering floors and walls and forming partitions.**

(57) A panel-shaped composite material for covering floors and walls and forming partitions obtained by joining a foamed material with a number of members of a covering material such as for example tiles, each panel comprising a block of foamed material preferably having the shape of a parallelepiped to at least one face of which a plurality of regularly arranged tiles are attached.

EP 0 145 675 A2

**"A panel-shaped composite material for covering floors and walls and forming partitions."**

This invention refer to a panel-shaped composite material intended to be used for covering floors and walls and forming partitions.

As known in the art, a number of materials generally used in building, such as the coverings of walls and floors, require a long and difficult manual operation to be installed which involves the use of skilled and then extremely costly labour.

Accordingly, it is an object of the invention to provide a prefabricated panel-shaped material which allows the covering materials to be quickly and easily installed without requiring the use of skilled labour.

The material of the invention has a further advantage in that it allows the use of covering materials, particularly tiles, having a smaller thickness and accordingly being lighter and less costly than the covering materials used at present.

The material of the invention has a further advantage in that is has extremely good insulating characteristics.

A further advantage of the material of the invention is that this material is a good soundproofing material.

Accordingly, the panel-shaped composite material of the invention comprises a rigid block of a foamed material having the shape of a quadrangular parallelepiped. The height of this block is rather small with respect to the length of the sides of the parallelepiped base. A number of tiles placed side by side according to a given arrangement are fixed to at the least one of the largest faces of that rigid block.

Accordingly, the arrangement and anchorage of a number of panels on a floor or wall allow the floor or wall to be quickly and easily covered with the panels.

The panel-shaped composite material for covering floors and walls according to the invention will be now described in detail with reference to the annexed drawings, wherein:

Figure 1 is a perspective view of a finished panel;

Figure 2 is a diagrammatic perspective view of a partially sectioned mold for forming a panel from the composite material;

Figures 3 and 4 are a top and side view, respectively, of the mold; and,

Figure 5 is a perspective view of a panel provided with a number of layers of a material suitably inserted to provide the panel with the characteristics required.

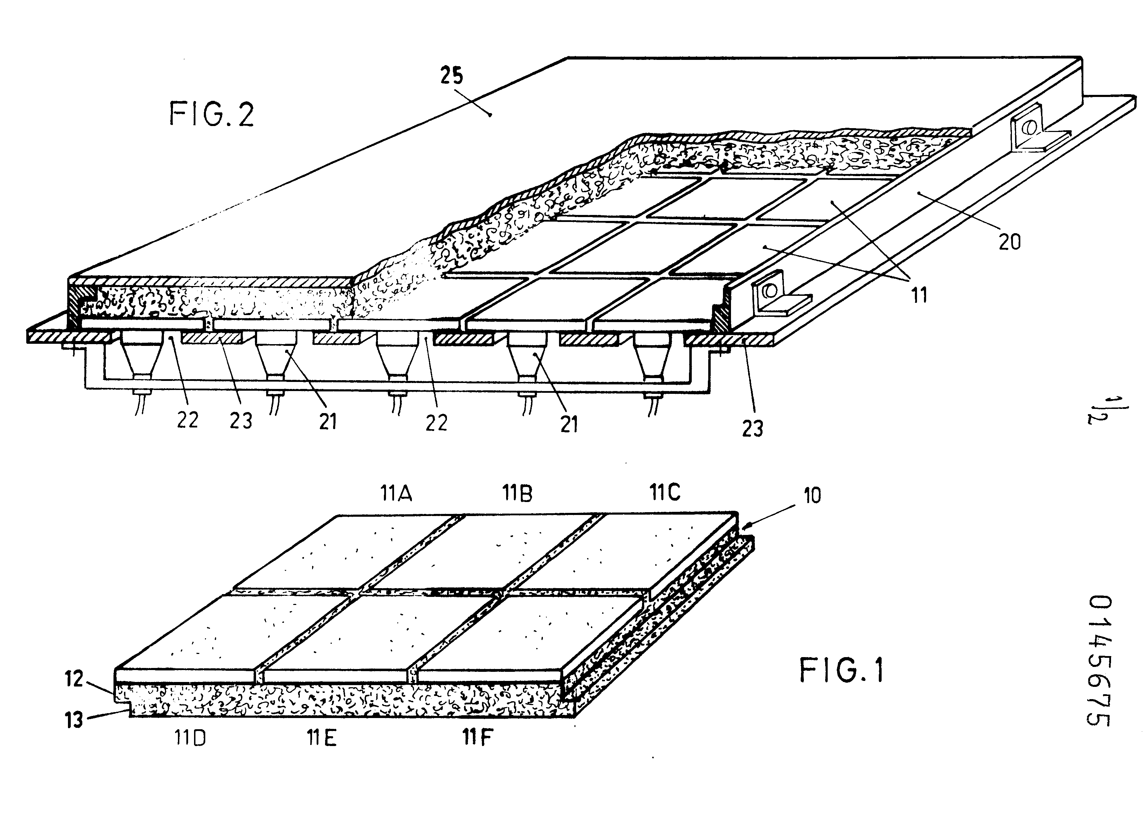

With reference to Figure 1, it is shown therein that in this embodiment the panel of composite material substantially comprises a parallelepiped-shaped block having a rectangular base made from a foamed material referred to by numeral 10. A number of tiles referred to by numeral 11 are fixed to the upper face of the panel, which tiles are placed side by side along two rows, each row comprising three tiles.

Furthermore, a notch 13 is formed on the lower portion of side face 12 and a corresponding step 15, having the same shape and dimensions, is formed on opposite side face 14. The notch on a block and the step on the adjacent block are intended to engage with each other, thus causing two adjacent blocks to form an integral unit.

The tiles are fixed to the block of foamed material on shaping the block by normal adhesion of that material to the tile back.

Accordingly, a detaching material will be used on all the surfaces on which the foamed material is not intended to adhere.

At present, the foamed material is formed by two different methods. In both methods suitable molds are used which, as it will be apparent from the following description, may have a different construction according to the particular characteristics required for the block of foamed material.

One method is the injection method wherein the material intended to form the foamed block is injected in the close mold 20 (Figure 2) on the bottom of which tiles 11 are arranged.

The tiles are held in place by a series of vacuum devices 21 operating on the outer face of the tiles through openings 22 formed on wall 23 of mold 20.

In order to ease the polimerization process of the foamed block, mold 20 will be kept in an atmosphere heated at the temperature of about 50°-60°C.

At the end of the polimerization period, the mold will be opened, which mold should be provided with openings on two sides thereof intended to facilitate the drawing of the handpiece. The drawing operation will be facilitated by the use of the detaching agent previously applied, as mentioned above.

The other method is the frothing method which comprises the spraying of successive layers into an open-top mo'd. starting from the back of the tiles, to obtain the desired block thickness.

By this method, the r i will be closed when the layer succession is complete in order to prevent the material intended to form the foamed block from deforming during the polimerization process. Also, in this case, the polimerization process will occur in a mold held in an atmosphere heated at the temperature of about 50°-60°C.

In both methods, since small gaps must be left between adjacent tiles, also to compensate the thermal expansion, adhesive tapes could be sticked on the back of the tiles in correspondence of these gaps, in order to prevent the foamed material from filling the same.

As mentioned above, the block of foamed material should be provided with different features and this can be easily obtained according to the invention in two different ways.

At present, the main requirements are as follows:

- providing the block of foamed material with high stiffness at the layer immediately adjacent to the back of the tiles in order to prevent the tiles from breacking due to resilient deflections of the backing block to which the tiles are not able to adapt due to the high stiffness thereof;

- providing the block of foamed material with good soundproofing characteristics;

- providing the block of foamed material with good characteristics of thermal insulation.

The block of foamed material and, accor-

- 7 -

0145675

dingly, the panel of the invention can be provided with such contrasting features, stiffness
for example excludes soundproofing, only by differentiating from each other one more layers of
the block.

According to the invention, this differentiation can be obtained either by adding some
fillers to the material intended to form the
layer to be provided with given characteristic,
or by suitably placing in the block some layers
of a different material adapted to provide that
feature.

Using the first method, powdered calcium
carbonate, or zirconium sand or quartz can be
used as a filler to obtain high stiffness,
while crumbled textile fibers can be used to
obtain good soundproofing characteristics.
Finally, high thermal insulation is obtained
either using a good foamed material, polyure-
than for example is extremely good, or suita-
bly varying the density thereof.

The different material to be used in the
second method can be either a fiber glass mat
or the like or a closely-meshed wire net to
obtain the high stiffness, and a felt sheet

0145675

or the like to obtain the good soundproofing characteristic.

Of course, the mat or net will be placed in direct contact with the back of the tiles before injecting or spraying the foamed material, according to the foaming method adopted.

The felt will be fitted within the tickness of the block without excessive difficulties by using the frothing method, while in the injection method it should be possible to place upper wall 25 of mold 20 at an always increasing distance from lower wall 23, thus allowing the felt to be placed at a certain distance from the tiles within the thickness of block 10.

A mold of the above-mentioned type will be used in the injection foaming method together with the method of "charging" the foamed material with a filler. Thus, it will be possible, for example, to form a thin layer of foamed material charged with calcium carbonate immediately adjacent to the back of the tiles, followed by a layer of simple foamed material, a layer of foamed material charged with textile fibers and a further layer of simple foamed material, by gradually raising upper wall 25.

Of course, no difficulties will be met in forming a number of layers of differently-charged foamed material by using the "frothing" method, that is by spraying the successive layers of foamed material.

Relating to the foamed material to be used, extremely good results were obtained by foaming in a close mold a mixture of polyol and isocyanate suitably catalyzed and charged to obtain a polyurethanic foam having a density of $45 \div 55$ kg/m$^3$.

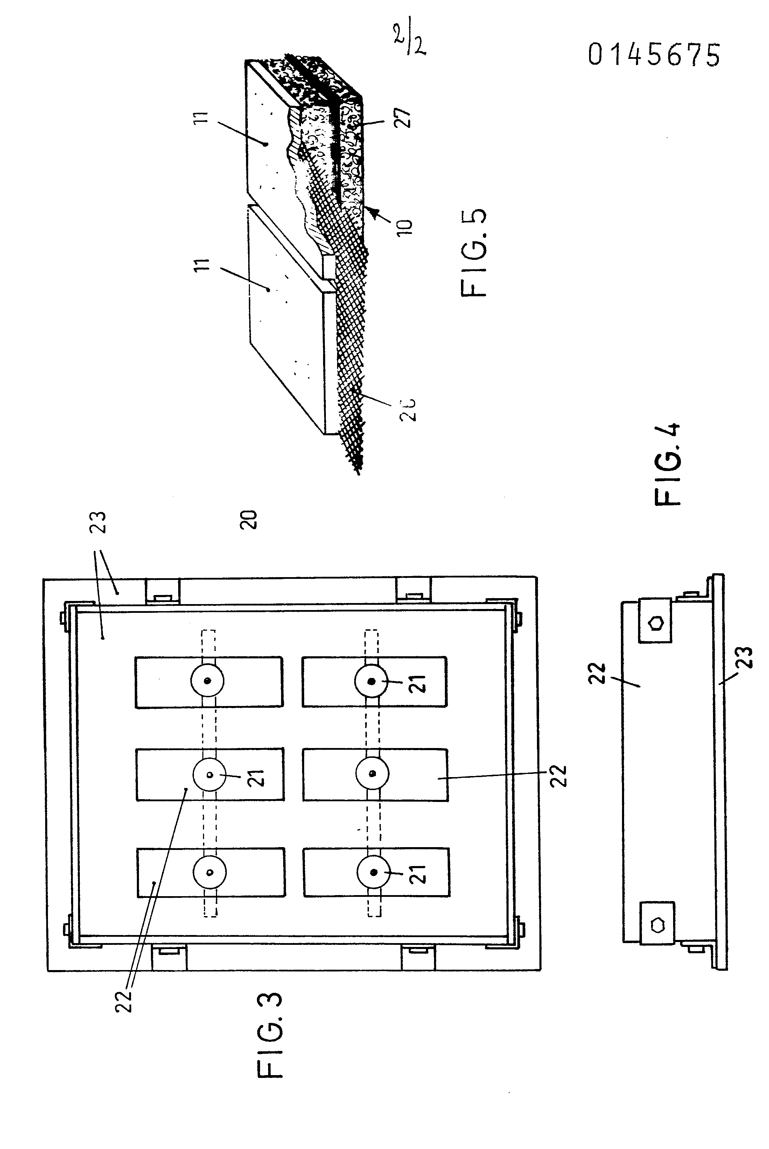

Figure 5 shows a composite panel according to the invention comprising two different layers intended to provide the block of foamed material 10, which is a main portion of the panel, with the characteristic of stiffness provided by mat 26 placed in contact with the back of tiles 11 and sour proofing provided by the layer of felt 27 placed about in the middle within the thickness of block 10. The thickness of felt 27 will preferably range from 3 to 12 mm.

It will be evident that the above-described methods will be suitably varied to form panels according to the invention intended to be used

0145675

as partitions, that is "sandwich" panels wherein the foamed block carries the tiles on both the largest faces thereof.

Relating to the thickness of the composite panel according to the invention, this thickness can range from about 1 to 10 cm, while the thickness of the tiles used, which as mentioned above can be smaller than the thickness of the tiles intended to be directly installed, can range from about 4 to 10 mm.

Of course, the panels of the invention are installed without difficulties and without requiring the operation of skilled labour. In connection therewith it should be noted that the panel of the invention allows tile misplacements to be eliminated on the creation of complex drawings or ornamental patterns, which misplacements frequently occur on the installation of the single tiles.

Finally, it should be noted that the spaces remaining between the tiles of a panel and the tiles of the adjacent panel will be eliminated by finishing operation, using methods and materials directly known by the panel manufacturer, after the panels have been installed.

0145675

It is evident that changes and modifications can be made to the panel as illustrated and descibed without departing from the scope and concepts of the invention.

The block of foamed material, for example, may have the shape of any suitable regular solid.

Finally, it will be evident that the invention can be realized with tiles of any type, shape and size.

0145675

## CLAIMS

1. A panel-shaped composite material for covering floors and walls and forming partitions obtained by joining a closed-cell foamed material to a plurality of elements of a covering material such as for example tiles, each panel comprising a block of a foamed material having the shape of a regular body to at least one face of which a plu-rality of regularly arranged tiles are fixed.

2. The panel-shaped composite material according to claim 1, wherein a plurality of regularly arranged tiles are fixed to two or more faces of said regular body.

3. The panel-shaped composite material according to claim 1, wherein said regular body is a parallelepiped having a quadrangular base.

4. The panel-shaped composite material according to claim 1, obtained by placing said regularly arranged tiles in a suitable mold and forming the foamed material within said mold.

5. The panel-shaped composite material according to claim 1, wherein said foamed material is formed within said mold by the injection method.

6. The panel-shaped composite material according to claim 1, wherein said foamed material is formed within said open mold by the frothing method.

7. The panel-shaped composite material according to claim 1, wherein a single permeable continuous member adapted to provide the corresponding layer of foamed material with the stiffness characteristics is placed in direct contact with the back of the tiles before forming the foamed material.

8. The panel-shaped composite material according to claim 7, wherein said member is a wire net.

9. The panel-shaped composite material according to claim 7, wherein said member is a layer of fiber glass.

10. The panel-shaped composite material according to claim 4, wherein on forming the foamed material a sheet of a textile is placed in the body thereof.

11. The panel-shaped composite material according to claim 10, wherein said sheet comprises a felt.

12. The panel-shape composite material according to claim 5, wherein the foamed material

- 14 -

0145675

is formed by injecting a number of successive layers and is charged with a different characteristics.

13. The panel-shaped composite material according to claim 12, wherein to form the layer of foamed material in direct contact with the back of the tiles said foamed material is charged with powdered calcium carbonate.

14. The panel-shaped composite material according to claim 12, wherein to form the layer of foamed material in direct contact with the tiles said foamed material is charged with powdered quartz.

15. The panel-shaped composite material according to claim 13, wherein to form the layer of foamed material in direct contact with the tiles said foamed material is charged with zirconium sand.

16. The panel-shaped composite material according to claim 5, wherein to form an intermediate layer said foamed material is charged with crumbled textile fibers.

17. The panel-shaped composite material, wherein the spaces existing between two tiles of the regular arrangement to allow the thermal ex-

0145675

pansion thereof are closed by adhesive tapes attached to the back of the tiles.

18.   The panel-shaped composite material according to any of the preceding claims, wherein said foamed material is polyurethan.

FIG.2

FIG.1

0145675

FIG.5

FIG.4

FIG.3